# EUROPÄISCHE PATENTSCHRIFT

(11) **EP 1 203 679 B1**
(45) Veröffentlichungstag und Bekanntmachung des Hinweises auf die Patenterteilung: **09.08.2006**
(21) Anmeldenummer: 00123995.3
(22) Anmeldetag: 04.11.2000
(51) Int. Cl.: B60J 7/12, B60R 21/13, B60J 7/20

(54) **Fahrzeugdach mit einem zwischen Schliessstellung und Öffnungsstellung verstellbaren Verdeck**
Vehicle roof with a movable vehicle roof between an open and closed position
Toit de véhicule avec un toit déplaçable entre une position de fermeture et d'ouverture

(43) Veröffentlichungstag der Anmeldung: 08.05.2002
(73) Patentinhaber: CTS Fahrzeug-Dachsysteme GmbH, 74321 Bietigheim-Bissingen (DE)
(72) Erfinder: Just, Jan, Michigan 48382 (US); Aydt, Matthias, 71735 Eberdingen (DE)
(74) Vertreter: Müller, Gottfried

(56) Entgegenhaltungen:
- EP-A- 0 362 524
- DE-A- 19 533 974
- DE-A- 19 540 742
- US-A- 4 557 502
- US-A- 5 702 150
- US-A- 5 918 928

## Beschreibung

Die Erfindung betrifft ein Fahrzeugdach mit einem zwischen Schließstellung und Öffnungsstellung verstellbaren Verdeck nach dem Oberbegriff des Anspruches 1.

Aus der Druckschrift DE 197 14 104 C1 ist ein Cabriolet-Fahrzeug mit einem verstellbaren Überrollbügel bekannt, wobei der Überrollbügel in Schließstellung des Verdecks sich in einer umgeklappten Ablageposition und in Öffnungsstellung des Verdecks sich in aufgestellter Schutzposition befindet. Bei der Überführungsbewegung des Verdecks von Schließstellung in Öffnungsstellung wird das Verdeck zunächst in eine rückwärtige Position hinter dem Überrollbügel und einem Verdeckkastendeckel verbracht, anschließend der Verdeckkastendeckel geöffnet, das Verdeck in den Stauraum überführt und schließlich der Verdeckkastendeckel wieder geschlossen. Die Öffnungs- und Schießbewegung des Verdeckkastendeckels wird von dem Überrollbügel ausgelöst, der zu diesem Zweck mit dem Verdeckkastendeckel koppelbar ist. Nach der Überführung des Verdecks in Staustellung und Schließen des Verdeckkastendeckels wird der Überrollbügel vom Verdeckkastendeckel entkoppelt und in seine aufrechte Schutzposition überführt.

Der Überrollbügel weist eine fahrzeugfeste Schwenkachse auf und auch die Kinematik des Verdecks ist fest mit dem Fahrzeug verbunden, wobei die Schwenkachsen der Verdeckkinematik in Fahrzeuglängsrichtung gesehen hinter dem Überrollbügel und dem Verdeckkastendeckel angeordnet sind, um sicher zu stellen, dass das Verdeck bei der Überführung zwischen Öffnungs- und Schließstellung eine den Überrollbügel und den Verdeckkastendeckel übergreifende Bewegung ausführen kann.

Diese Ausführung benötigt einen in Fahrzeuglängsrichtung gesehen verhältnismäßig großen Einbauraum, wodurch sich der zur Verfügung stehende Raum für die Passagiere und der Kofferraum entsprechend verringert. Ein weiteres Problem liegt darin, dass das Fahrzeugdach einschließlich dem Überrollbügel fahrzeugindividuell bei der Montage des Fahrzeuges eingebaut und nach dem Einbau einer Funktionsüberprüfung unterzogen werden muss, wobei eventuell auftretende Fehler und Fehlfunktionen zu aufwendigen Nachbesserungsarbeiten führen, die den gesamten Produktionsprozess des Fahrzeuges behindern.

Aus der Druckschrift DE 196 43 225 C1 ist ein verstellbares Fahrzeugdach bekannt, welches als vormontiertes Modul in ein Fahrzeug einsetzbar ist, wobei das Modul eine Verdeckablage, einen Überrollbügel und ein verstellbares Fahrzeugverdeck umfasst. Dem Fahrzeugdachmodul ist weiterhin ein umklappbarer Überrollbügel zugeordnet, der im Normalfall horizontal abgelegt ist und sich in einer Verdeckwanne der Verdeckablage befindet und in Notfällen in eine senkrechte, die Fahrzeiginsassen schützende Position aufgestellt wird.

Der umklappbare Überrollbügel muss an der Wanne der Verdeckablage schwenkbar gelagert sein, wobei im Schwenkweg des Überrollbügels keine die Schwenkbewegung behindernden Bauteile liegen dürfen und der Überrollbügel auch keine sonstigen, die Schwenkbewegung beeinträchtigenden Kräfte aufnehmen darf, damit in Notfällen ein sicheres Aufrichten des Überrollbügels gewährleistet ist. Eine Anbindung des Fahrzeugdachmoduls an die Fahrzeugkarosserie über den schwenkbaren Überrollbügel ist daher ausgeschlossen. Die Anbindung muss vielmehr mit einem stationären Bauteil erfolgen, nämlich mit der Verdeckwanne oder einem der Verdeckablage zugeordneten Träger. Da die Verdeckablage sich aber in Fahrzeuglängsrichtung gesehen hinter dem Gesamtschwerpunkt des Fahrzeugdachmoduls befindet, ist eine Abstützung in nur einer Ebene im Bereich der Verdeckablage nicht möglich; vielmehr müssen in einer zweiten Ebene zusätzliche Anbindungspunkte vorgesehen sein, welche einen erheblichen Anteil der Gewichtskraft und auf Grund der Anordnung außerhalb des Schwerpunkts des Moduls zusätzlich auch Kippmomente aufnehmen. Hierdurch steigt die Bauteilbelastung sowohl im Bereich des Fahrzeugdachmoduls als auch im Bereich der aufnehmenden Karosserie.

Aus der gattungsbildenden DE 44 12 109 A1 ist es bekannt, den Überrollbügel und das Fahrzeugverdeck zu einer vormontierten Einheit zusammenzufassen, wobei am Überrollbügel diverse Zusatzstützen vorgesehen sind, über die eine Anbindung der vormontierten Einheit an die Fahrzeugkarosserie möglich ist. Die Stützen des Überrollbügels liegen in Fahrzeuglängsrichtung gesehen mit Abstand auseinander, wobei zumindest vier Verbindungsstellen zwischen Fahrzeugdachmodul und Fahrzeugkarosserie vorgesehen sind, die in zwei unterschiedlichen Querebenen liegen, so dass zusätzliche Kippmomente aufgenommen werden müssen.

Zum allgemeinen technologischen Hintergrund wird noch auf die Druckschrift DE 196 46 035 C2 verwiesen.

Der Erfindung liegt das Problem zu Grunde, ein Fahrzeugdach zu schaffen, das einerseits hohen Sicherheitsanforderungen genügt und andererseits kostengünstig zu fertigen und zu montieren ist.

Dieses Problem wird erfindungsgemäß mit den Merkmalen des Anspruches 1 gelöst.

Gemäß der Neuerung ist vorgesehen, dass der Überrollbügel mit der Verdeckablage und dem Verdeck eine zusammenhängende, fest verbundene Einheit bzw. Modul bildet. Diese fest verbundene Einheit, welche insbesondere in sich steif ausgebildet ist, kann in einem eigenständigen Fertigungs- und Produktionsprozess vorgefertigt werden und vor dem Einbau in das Fahrzeug als eigenständiges Modul einer vollständigen Funktionsüberprüfung unterzogen werden. Nachbesserungen und die Behebung von Fehlern werden unabhängig vom Produktionsprozess des Fahrzeuges durchgeführt, die Produktionsabläufe von Fahrzeug und Fahrzeugdach sind räumlich und zeitlich weitestgehend entkoppelt.

Nach der Montage und Funktionsüberprüfung des Fahrzeugdaches kann dieses als vorgefertigte Einheit in das Fahrzeug eingesetzt werden und insbesondere über den Überrollbügel als zentraler Baueinheit innerhalb des Moduls mit dem Fahrzeug verbunden werden.

Das Modul erfüllt auch hohe Sicherheitsanforderungen bei zugleich kleiner Baugröße, weil durch die Einheit von Überrollbügel als zentralem Bauteil, Verdeckablage als hinten liegendem Bauteil und Verdeck als in Schließstellung vorne liegendem Bauteil eine räumlich kompakte Anordnung realisiert werden kann. Der Überrollbügel, welcher insbesondere als feststehender Überrollbügel ausgebildet ist, erfüllt die an ein verstellbares Fahrzeugdach gestellten Sicherheitsanforderungen, wobei insbesondere in der Ausführung, in der der Überrollbügel über Verbindungspunkte unmittelbar mit der Fahrzeugkarosserie verbunden ist, ein direkter Kraftfluß vom Überrollbügel in die Fahrzeugkarosserie gegeben ist.

Die Verdeckablage, welche vorteilhaft eine Verdeckwanne zur Aufnahme des Verdecks in Öffnungsstellung und einen Verdeckkastendeckel umfasst, ist über Stützarme mit dem Überrollbügel verbunden, wobei die Schwenkachse des Verdeckkastendeckels auf der dem Überrollbügel abgewandten Seite der Stützarme liegt, so dass beim Öffnen des Verdeckkastendeckels die offene Seite des Deckels dem Überrollbügel zugewandt ist und das Verdeck ohne Behinderung in den Stauraum abgelegt werden kann.

In einer bevorzugten Ausführung umfasst das Modul zusätzlich eine oder mehrere der Baueinheiten Stellhydraulik für das Verdeck sowie die Steuerung der Stellhydraulik, Verstellkinematik für den Verdeckkastendeckel und zentrale Steckverbindung für die fahrzeugseitige Anbindung der Fahrzeugelektrik und der Stromversorgung elektrischer Stellelemente. In dieser Ausführung umfasst das Modul sämtliche für den Betrieb erforderlichen Bauteile, so dass sowohl unmittelbar nach der Montage noch vor dem Einbau in das Fahrzeug ohne besondere Hilfsmittel eine Funktionsüberprüfung des Fahrzeugdaches durchgeführt werden kann und außerdem der Einbau in das Fahrzeug wesentlich erleichtert wird, da zusätzlich zur mechanischen Anbindung, welche über wenige Verbindungsstellen mit einfachen Mitteln hergestellt werden kann, nur eine einzige elektrische Steckverbindung geschlossen werden muss.

Weitere Vorteile und zweckmäßige Ausführungsformen sind den weiteren Ansprüchen, der Figurenbeschreibung und den Zeichnungen zu entnehmen. Es zeigen:
- Fig. 1: eine perspektivische Explosionsdarstellung einer aus Überrollbügel, Verdeckablage und Verdeck bestehenden Einheit einschließlich diverser Zusatzbauteile,
- Fig. 2: eine perspektivische Teilansicht auf den Überrollbügel und der am Überrollbügel befestigten Verdeckablage,
- Fig. 3: eine Ansicht von unten auf den Überrollbügel und die Verdeckablage.

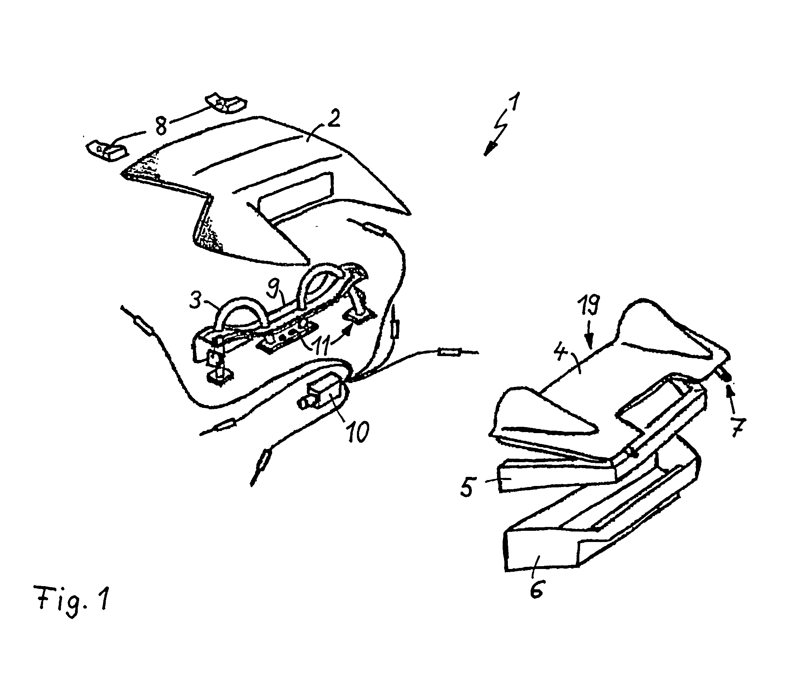

Das in Fig. 1 dargestellte Fahrzeugdach 1 kann zwischen einer den Fahrgastraum eines Fahrzeuges verschließenden Schließstellung und einer Öffnungsstellung verstellt werden. Das Fahrzeugdach 1 umfasst als Hauptkomponenten ein verstellbares Verdeck 2, einen Überrollbügel 3 sowie einen Verdeckkastendeckel 4 und darüber hinaus diverse, den Hauptkomponenten zugeordnete weitere Bauteile. Der Verdeckkastendeckel 4 ist an einem darunterliegenden Tragrahmen 5 gehalten, der an einer Verdeckwanne angeordnet ist, welche das Verdeck 2 in Öffnungsstellung aufnimmt .

Das Verdeck 2 umfasst ein Verdeckgestell, einen außenliegenden Stoffbezug und einen dem Fahrgastinnenraum zugewandten Innenhimmel sowie einen Verdeckverschluß 8, über den das Verdeck in Schießstellung am Windschutzscheibenrahmen zu befestigen ist.

Am Überrollbügel 3, welcher von einer Verkleidung 9 überdeckt ist, sind Verbindungspunkte 11 vorgesehen, über die der Überrollbügel mit der Fahrzeugkarosserie zu verbinden ist. Im Bereich des Überrollbügels sind eine nicht dargestellte Stellhydraulik für die Verstellung des Verdecks 2 und des Verdeckkastendeckels 4 sowie ein Steuergerät 10 angeordnet, welche die Stellhydraulik steuert. Darüber hinaus sind an den Stirnseiten des Überrollbügels bewegliche Klappen angeordnet, welche in Ruhestellung des Verdecks einen Sichtschutz auf die unterhalb der überstehenden Bügel des Überrollbügels 3 befindlichen Bauteile bieten und bei der Überführungsbewegung des Verdecks zwischen Schließ- und Öffnungsstellung bzw. zwischen Öffnungs- und Schließstellung herunter gefahren werden, um einem ausreichenden Bewegungsraum für die Verstellkinematik zu ermöglichen.

Das Verdeck 2, der Überrollbügel 3 und der Verdeckkastendeckel 4 bilden eine zusammenhängende, fest verbundene Einheit, die vor dem Einbau in das Fahrzeug als eigenständiges Modul montiert und auf Funktionstüchtigkeit getestet werden kann. Das Modul umfasst vorteilhaft sämtliche für den Öffnungs- und Schließvorgang des Daches erforderlichen Bauteile, insbesondere die für die Verstellung von Verdeck 2 und Verdeckkastendeckel 4 erforderlichen Kinematiken, die Stellhydraulik sowie das Steuergerät 10. Nach der Montage des Fahrzeugdaches kann dieses über die Verbindungspunkte 11 auf einem Prüfstand aufgebaut und das Steuergerät 10 mit einer die Fahrzeugelektrik simulierenden Prüfstandselektrik verbunden werden. Nach dem Test der Funktionstüchtigkeit des Fahrzeugdaches 1 kann dieses als zusammenhängendes Modul in ein Fahrzeug integriert werden, wobei lediglich eine mechanische Anbindung über die Verbindungspunkte 11 und eine elektrische Anbindung über das Steuergerät 10 erforderlich sind.

Der Verdeckablage insbesondere der Verdeckwanne können Wasserfang-Bauteile zur Ableitung eindringenden Wassers zugeordnet sein.

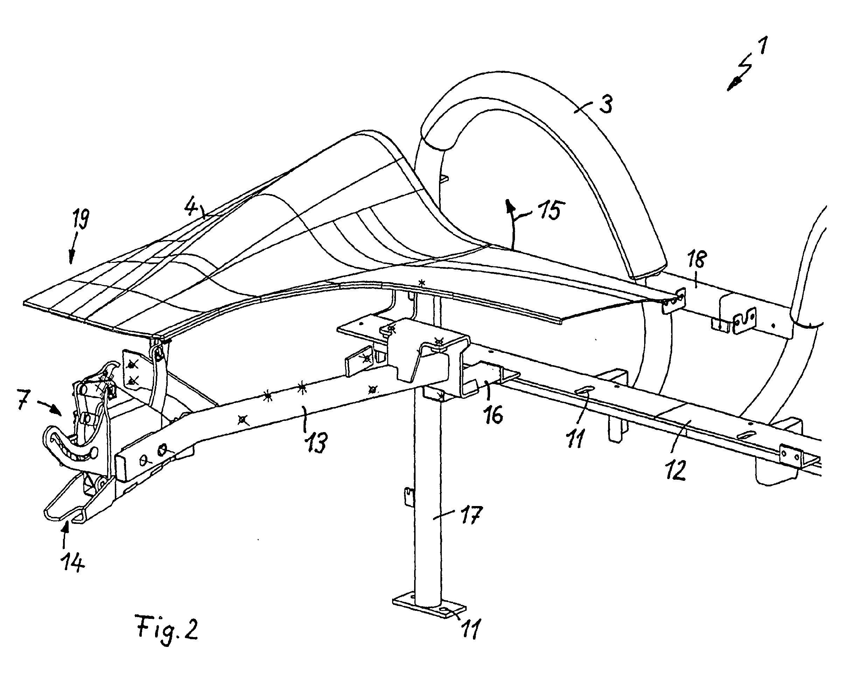

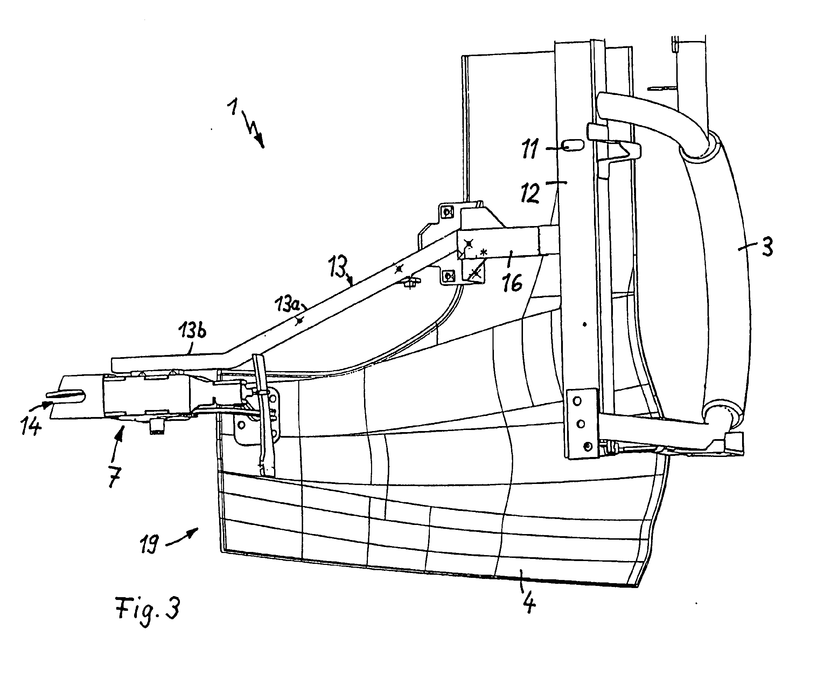

Die in Fig. 2 und Fig. 3 dargestellte Ausschnittvergrößerung des Fahrzeugdaches 1 zeigt den Überrollbügel 3 und den Verdeckkastendeckel 4 einschließlich der Überrollbügel 3 und Verdeckkastendeckel 4 verbindenden Bauteile. Am Überrollbügel 3 ist ein Querrahmen 12 vorgesehen, der Träger der Einzelbügel des Überrollbügels 3 ist und darüber hinaus die der Verdeckablage zugeordneten Bauteile aufnimmt. Hierfür sind seitlich am Querrahmen 12 angeordnete, sich nach hinten erstreckende Stützarme 13 vorgesehen, die im Bereich ihres dem Querrahmen 12 abgewandten Endes die Verstellkinematik 7 des Verdeckkastendeckels tragen; der Verdeckkastendeckel 4 ist mit der Verstellkinematik 7 verbunden und wird von dieser aus der in Fig. 2, Fig. 3 gezeigten Verdeckstellung um eine querverlaufende, hintenliegende Schwenkachse in Pfeilrichtung 15 in die Öffnungsstellung überführt in der die darunter liegende Verdeckwanne offenliegt und das Verdeck abgelegt werden kann. In der gezeigten Ausführung kann die dem Überrollbügel 3 zugewandte Seite des Verdeckkastendeckels 4 in die Öffnungsstellung aufschwenken, was den Vorteil einer raumsparenden Anordnung bietet, da das Verdeck und der Verdeckkastendeckel auf unterschiedlichen Seiten des Überrollbügels angeordnet sind und zur Überführung des Verdecks in die Verdeckablage das Verdeck über den Überrollbügel hinweg verschwenkt werden kann.

Der Stützarm 13 ist abgewinkelt ausgebildet und weist einen in Bezug auf die Fahrzeuglängsachse schräg verlaufenden Abschnitt 13a sowie einen kürzeren, geradlinig verlaufenden Abschnitt 13b auf, wobei Letzterer Träger der Verstellkinematik 7 ist. Der geradlinige Abschnitt 13b des Stützarms liegt in Bezug auf die Fahrzeuglängsachse weiter außen als die Anbindung des Stützarms 13 an einem mit dem Querrahmen 12 verbundenen Flansch 16.

Die Anbindung des Fahrzeugdaches 1 an die Fahrzeugkarosserie erfolgt über Verbindungspunkte 11 im Querrahmen 12 sowie an einem Stützfuß 17, welcher dem Überrollbügel 3 zugeordnet ist und nach unten gezogen ist, sowie über eine Verbindungsstelle 14, welche im Bereich der Verstellkinematik 7 des Verdeckkastendeckels 4 vorgesehen ist.

## Patentansprüche

1. Fahrzeugdach mit einem zwischen Schließstellung und Öffnungsstellung verstellbaren Verdeck, das in Schließstellung den Fahrzeuginnenraum überspannt und in Öffnungsstellung in einer Verdeckablage abgelegt ist, und mit einem Überrollbügel, der mit der Verdeckablage gekoppelt ist, wobei der Überrollbügel (3) mit der Verdeckablage (19) und dem Verdeck (2) eine zusammenhängende, fest verbundene Einheit bildet, die als vormontiertes Modul in das Fahrzeug integrierbar ist
**dadurch gekennzeichnet,**
- **dass** die Verdeckablage (19) eine Verdeckwanne (6) und einen die Verdeckwanne (6) verschließenden Verdeckkastendeckel (4) umfasst,
- **dass** am Überrollbügel (3) ein Querrahmen (12) vorgesehen ist, der Träger der Einzelbügel des Überrollbügels (3) ist und die der Verdeckablage (19) zugeordneten Bauteile aufnimmt, wobei im Querrahmen (12) Verbindungspunkte (11) zur Verbindung des Moduls mit dem Fahrzeug vorgesehen sind,
- **dass** die Verdeckablage (19) über sich nach hinten erstreckende Stützarme (13) seitlich am Querrahmen (12) angebunden ist,
- **dass** die Stützarme (13) im Bereich ihres dem Querrahmen (12) abgewandten Endes eine Verstellkinematik (7) für den Verdeckkastendeckel (4) mit einer auf der dem Überrollbügel (3) abgewandten Seite der Stützarme (13) angeordneten Schwenkachse tragen und dass der Verdeckkastendeckel (4) ausschließlich über die Verstellkinematik (7) mit dem Überrollbügel (3) verbunden ist.

2. Fahrzeugdach nach Anspruch 1
**dadurch gekennzeichnet ,**
**dass** dem Verdeck ein Verdeckgestell, ein Stoffbezug und ein Innenhimmel zugeordnet ist.

3. Fahrzeugdach nach einem der Ansprüche 1 bis 2,
**dadurch gekennzeichnet ,**
**dass** die Stellhydraulik für die Verstellung des Verdecks (2) und des Verdeckkastendeckels (4) in das Modul integriert ist.

4. Fahrzeugdach nach Anspruche 3,
**dadurch gekennzeichnet ,**
**dass** ein die Stellhydraulik steuerndes Steuergerät (10) in das Modul integriert ist.

5. Fahrzeugdach nach einem der Ansprüche 1 bis 4,
**dadurch gekennzeichnet ,**
**dass** die Anbindung des Verdecks (2) an das Modul in einem geringeren Abstand zum Überrollbügel (3) liegt als die Schwenkachse des Verdeckkastendeckels (4).

6. Fahrzeugdach nach einem der Ansprüche 1 bis 5,
**dadurch gekennzeichnet ,**
**dass** an den Stützarmen (13) weitere Verbindungspunkte (11) zum Fahrzeug vorgesehen sind.

## Claims

1. Vehicle roof with a convertible top which may be adjusted between a closed position and an open position, which spans the vehicle interior in the closed position and, in the open position, is deposited in a convertible top storage compartment, and with a rollover bar which is coupled to the convertible top storage compartment, the rollover bar (3) forming with the convertible top storage compartment (19) and the convertible top (2) a cohesive, firmly attached unit which may be integrated in the vehicle as a preassembled module, **characterized**
- **in that** the convertible top storage compartment (19) comprises a convertible top tray (6) and a convertible top compartment cover (4) closing the convertible top tray (6),
- **in that** a cross frame (12) is provided on the rollover bar (3), which supports the individual bars of the rollover bar (3) and receives the components associated with the convertible top storage compartment (19), connection points (11) being provided in the cross frame (12) for connecting the module to the vehicle,
- **in that** the convertible top storage compartment (19) is connected laterally to the cross frame (12) via supporting arms (13) extending to the rear,
- **in that** the supporting arms (13), in the region of their end facing away from the cross frame (12), carry adjusting kinematics (7) for the convertible top compartment cover (4) with a pivot axis arranged on the side of the supporting arms (13) facing away from the rollover bar (3) and in that the convertible top compartment cover (4) is solely connected to the rollover bar (3) via the adjusting kinematics (7).

2. Vehicle roof according to Claim 1, **characterized in that** a convertible top frame, a fabric cover and a internal lining are associated with the convertible top.

3. Vehicle roof according to one of Claims 1 to 2, **characterized in that** the hydraulic adjusting system for adjusting the convertible top (2) and the convertible top compartment cover (4) is integrated in the module.

4. Vehicle roof according to Claim 3, **characterized in that** a control unit (10) controlling the hydraulic adjusting system is integrated in the module.

5. Vehicle roof according to any one of Claims 1 to 4, **characterized in that** the connection of the convertible top (2) to the module is located at a smaller distance from the rollover bar (3) than the pivot axis of the convertible top compartment cover (4).

6. Vehicle roof according to any one of Claims 1 to 5, **characterized in that** further connection points (11) to the vehicle are provided on the support arms (13).

## Revendications

1. Toit de véhicule avec une capote déplaçable entre une position de fermeture et une position d'ouverture, qui, dans la position de fermeture, est tendue par-dessus l'habitacle du véhicule et qui, dans la position d'ouverture, est rangée dans un rangement de capote, et comprenant un arceau de sécurité qui est accouplé avec le rangement de capote, l'arceau de sécurité (3) formant avec le rangement de capote (19) et la capote (2) une unité continue connectée fermement, qui peut être intégrée dans le véhicule sous forme de module prémonté,
**caractérisé en ce que**
- le rangement de capote (19) comprend une cavité de capote (6) et un couvercle de compartiment de capote (4) fermant la cavité de capote (6),
- un cadre transversal (12) est prévu sur l'arceau de sécurité (3), qui constitue le support des arceaux individuels de l'arceau de sécurité (3) et qui reçoit les composants associés au rangement de capote (19), des points de connexion (11) pour la connexion du module au véhicule étant prévus dans le cadre transversal (12),
- le rangement de capote (19) est relié latéralement au cadre transversal (12) par le biais de bras de support (13) s'étendant vers l'arrière,
- les bras de support (13) portent, dans la région de leur extrémité opposée au cadre transversal (12), une cinématique de déplacement (7) pour le couvercle du compartiment de capote (4) avec un axe de pivotement disposé sur le côté des bras de support (13) opposé à l'arceau de sécurité (3) et **en ce que** le couvercle de compartiment de capote (4) est connecté à l'arceau de sécurité (3) exclusivement par le biais de la cinématique de déplacement (7).

2. Toit de véhicule selon la revendication 1,
**caractérisé en ce que** l'on associe à la capote un bâti de capote, un revêtement en tissu et un habillage de plafond interne.

3. Toit de véhicule selon l'une quelconque des revendications 1 à 2,
**caractérisé en ce que**
l'hydraulique de réglage pour le déplacement de la capote (2) et du couvercle du compartiment de capote (4) est intégrée dans le module.

4. Toit de véhicule selon la revendication 3,
**caractérisé en ce qu'**un
appareil de commande (10) commandant l'hydraulique de réglage est intégré dans le module.

5. Toit de véhicule selon l'une quelconque des revendications 1 à 4,
**caractérisé en ce que**
la liaison de la capote (2) au module se trouve à une plus faible distance de l'arceau de sécurité (3) que l'axe de pivotement du couvercle du compartiment de capote (4).

6. Toit de véhicule selon l'une quelconque des revendications 1 à 5,
**caractérisé en ce que**
l'on prévoit sur les bras de support (13) d'autres points de connexion (11) au véhicule.
